# EUROPÄISCHE PATENTSCHRIFT

(11) **EP 1 597 334 B1**
(45) Veröffentlichungstag und Bekanntmachung des Hinweises auf die Patenterteilung: **29.10.2008**
(21) Anmeldenummer: 03748096.9
(22) Anmeldetag: 26.09.2003
(51) Int. Cl.: C09K 3/18, D06M 11/45, D06M 11/46, D06M 11/79, D06M 23/10

(54) **HERSTELLUNG VON SUSPENSION HYDROPHOBER OXIDPARTIKEL**
PRODUCTION OF SUSPENSIONS OF HYDROPHOBIC OXIDE PARTICLES
PRODUCTION D'UNE SUSPENSION DE PARTICULES D'OXYDE HYDROPHOBES

(30) Priorität: 29.10.2002 DE 10250328
(43) Veröffentlichungstag der Anmeldung: 23.11.2005
(73) Patentinhaber: Evonik Degussa GmbH, 45128 Essen (DE)
(72) Erfinder: NUN, Edwin, 48727 Billerbeck (DE); OLES, Markus, 45525 Hattingen (DE); MENZEL, Frank, 63456 Hanau (DE)
(86) Internationale Anmeldenummer: PCT/EP2003/010722
(87) Internationale Veröffentlichungsnummer: WO 2004/039909

(56) Entgegenhaltungen:
- EP-A- 0 637 616
- EP-A- 1 249 468
- DE-A- 10 118 346

## Beschreibung

Die Erfindung betrifft ein Verfahren zur Herstellung einer Suspension von hydrophoben Oxidpartikeln mit definierter, einstellbarer Viskosität, sowie eine Suspension von hydrophoben Oxidpartikeln mit definierter, einstellbarer Viskosität und deren Verwendung zur Herstellung von schmutz- und wasserabweisenden Beschichtungen auf Gegenständen.

Suspensionen von hydrophoben, nanostrukturierten Partikeln werden bei der Herstellung von schmutz- und wasserabweisenden Beschichtungen auf Gegenständen und textilen Flächengebilden verwendet. Bei der Herstellung dieser Beschichtungen werden hydrophobe Partikel auf die Oberfläche eines Gegenstands aufgebracht und somit eine Oberflächenstruktur mit Erhebungen auf der Oberfläche des Gegenstands erzeugt, die schmutz- und wasserabweisende Eigenschaften aufweist.

Das Prinzip von selbstreinigenden Beschichtungen ist allgemein bekannt. Zum Erzielen einer guten Selbstreinigung einer Oberfläche muss die Oberfläche neben einer sehr hydrophoben Oberfläche auch eine gewisse Rauhigkeit aufweisen. Eine geeignete Kombination aus Struktur und Hydrophobie macht es möglich, dass bereits geringe Mengen bewegten Wassers auf der Oberfläche haftende Schmutzpartikel mitnehmen und somit die Oberfläche reinigen (WO 96/04123; US 3,354,022).

Aus EP 0 933 388 ist ein Verfahren zur Herstellung strukturierter Oberflächen mit hydrophoben Eigenschaften bekannt, bei dem man zunächst eine Negativform durch Fotolithografie herstellt, mit dieser Negativform eine Kunststofffolie prägt und anschließend die Kunststofffolie mit Fluoralkylsilanen hydrophobiert.

Die EP-A 0 909 747 beschreibt ein Verfahren zur Erzeugung einer Selbstreinigungseigenschaft auf Keramikkörpem, wie beispielsweise Dachziegel, bei dem man eine Dispersion von Tonpartikeln in einer organischen Silikonharzlösung auf den Keramikkörper aufbringt und anschließend die Beschichtung aushärtet.

Aus der JP 7328532-A ist ein Beschichtungsverfahren bekannt, bei dem man feinteilige Teilchen mit einer hydrophoben Oberfläche auf einen feuchten Lack aufbringt und diesen aushärtet. Hierbei werden wasserabstoßende Oberflächen erhalten.

In DE 100 22 246 A1 wird ein Verfahren beschrieben, in dem hydrophobe nanostrukturierte Partikel zusammen mit einem Kleber oder einer kleberähnlichen Komponente in Sprayform Verwendung finden. Mittels diesem Verfahren werden strukturierte Oberflächen erzeugt, die jedoch nicht dauerhaft beständig sind.

Die im Stand der Technik beschriebenen Methoden zur Erzeugung schwer benetzbarer Oberflächen sind entweder sehr aufwändig oder führen zu nicht zufriedenstellenden Ergebnissen. Die Erzeugung einer strukturierten Oberfläche durch Prägeverfahren ist aufwändig und kann nur bei planen Oberflächen wirtschaftlich eingesetzt werden. Oberflächen, bei denen eine Strukturierung durch nachträgliches Aufbringen hydrophober Partikel erreicht wird, lassen sich häufig schlecht reproduzieren oder sie weisen nur eine geringe mechanische Belastbarkeit auf. Zudem ist auch dieses Verfahren sehr aufwändig. Des weiteren werden häufig fluororganische Verbindungen oder fluorhaltige Polymere benötigt, die nicht nur sehr teuer, sondern auch ökologisch äußerst bedenklich sind.

In der deutschen Patentanmeldung DE 101 35 157 ist ein Verfahren zum Aufbringen einer selbstreinigenden Beschichtung auf Textilien beschrieben. In diesem Verfahren werden hydrophobe nanostrukturierte pyrogene Kieselsäuren den chemischen Reinigungsmitteln, wie z.B. Perchlorethylen, Tetrachlorethylen oder Schwerbenzin, zugemischt und im Anschluss an die chemische Reinigung ein selbstreinigender wasserabweisender Effekt auf den Kleidungsstücken generiert. Auch in diesem Verfahren werden ökologisch bedenkliche halogenhaltige Lösemittel eingesetzt.

Eine Möglichkeit zur Erzeugung selbstreinigender textiler Flächengebilde mit wasserabweisenden Oberflächen beschreibt die deutsche Patentanmeldung DE 101 18 346. Die in dieser Anmeldung beschriebenen Suspensionen hydrophober strukturierter Partikel weisen den Nachteil auf, dass diese Suspensionen nur mittels Tauchverfahren oder Transferverfahren auf die entsprechenden Textilien aufgetragen werden können und durch Anlösen der Polymerfaser die Partikel fest in der Polymerfaseroberfläche verankert werden.

In EP 1 249 468 A2 werden selbstreinigende Polymeroberflächen durch hydrophobe Strukturen offenbart, die durch ein Lösemittel angelöst und Partikel, die nicht angelöst werden, auf diesen Polymeroberflächen abgelagert werden. Nach Entfernen des Lösemittels härten die Polymeroberflächen wieder aus und fixieren dadurch die teilweise in den Oberflächen stecken bleibenden Partikel. Auch in dieser Anmeldung weisen die in einem Lösemittel suspendierten Partikel den Nachteil auf, dass diese nur durch Anlösen der Polymeroberfläche in derselben fest verankert werden.
Es war deshalb die Aufgabe der vorliegenden Erfindung, ein Verfahren zur Herstellung einer Suspension von hydrophoben Oxidpartikeln mit definierter, einstellbarer Viskosität bereitzustellen, um so weitere Auftragsverfahren für Suspensionen von hydrophoben Oxidpartikeln, wie beispielsweise dem Rakelprozess, neben den bekannten Verfahren, wie beispielsweise Tauchen oder Sprühen, nutzen zu können.

Überraschenderweise wurde gefunden, dass sich Suspensionen von hydrophoben Oxidpartikeln mit definierter, einstellbarer Viskosität herstellen lassen, indem man niedrigstrukturierte hydrophobe Oxidpartikel in zumindest einem organischen Suspensionsmittel suspendiert und anschließend von 0,05 bis 15 Gew.-% bezogen auf das Suspensionsmedium an hochstrukturierten hydrophoben Oxidpartikeln zugibt. Gemäß dem erfindungsgemäßen Verfahren können Suspensionen, die durch ihre einstellbare Viskosität Auftragsverfahren erlauben, die eine geringere Investition und eine geringere Umweltbelastung durch verdampfende Suspensionsmittel darstellen, hergestellt werden. Ganz besonders vorteilhaft erweist sich der Umstand, dass mit dem vorliegenden erfindungsgemäßen Verfahren nun Suspensionen für Rakelprozesse bei Textilien oder für textile Beschichtungen zur Verfügung stehen.

Gegenstand der vorliegenden Erfindung ist ein Verfahren zur Herstellung einer Suspension von hydrophoben Oxidpartikeln mit definierter, einstellbarer Viskosität, wobei niedrigstrukturierte hydrophobe Oxidpartikel in zumindest einem organischen Suspensionsmittel suspendiert werden und anschließend 0,05 bis 15 Gew.-% bezogen auf das Suspensionsmedium an hochstrukturierten hydrophoben Oxidpartikel zugegeben werden, wobei unter niedrigstrukturierten hydrophoben Oxidpartikeln hydrophobe Oxidpartikel verstanden werden, die gegenüber den entsprechenden hochstrukturierten hydrophoben Oxidpartikeln eine um mindestens 30 % verringerte Dibutylphthalat-Absorption und eine um mindestens 50 % erhöhte Stampfdichte aufweisen.

Ebenfalls sind Gegenstand der vorliegenden Erfindung Suspensionen von hydrophoben Oxidpartikeln mit definierter, einstellbarer Viskosität und deren Verwendung für die Herstellung von schmutz- und wasserabweisenden Beschichtungen auf Gegenständen.

Durch das erfindungsgemäße Verfahren sind Suspensionen von hydrophoben Oxidpartikeln mit definierter, einstellbarer Viskosität zugänglich. Somit können nun Suspensionen von hydrophoben Oxidpartikeln mit höherer Viskosität als gemäß dem Stand der Technik und auch Pasten von hydrophoben Oxidpartikeln hergestellt werden. Die mit Hilfe des erfindungsgemäßen Verfahrens hergestellten Suspensionen erlauben es daher, andere Auftragsverfahren, wie z.B. den Rakelprozess, zu verwenden. Gemäß dem Stand der Technik werden die Suspensionen von hydrophoben Oxidpartikeln aufgesprüht oder der zu beschichtende Gegenstand wird in die Suspension der hydrophoben Oxidpartikel eingetaucht. Dadurch bedingt sind für den Auftrag der hydrophoben Oxidpartikel höhere Investitionskosten und auch eine höhere Umweltbelastung durch den höheren Anteil an organischen Suspensionsmittel. Die erfindungsgemäßen Suspensionen eignen sich insbesondere für die selbstreinigende und wasserabweisende Beschichtung von Textilien, da hier bereits für die Beschichtungen gemäß dem Stand der Technik, beispielsweise mit Polyurethanbeschichtungsmassen, ein Rakelprozess angewendet wird.

Das Verfahren zur Herstellung einer Suspension mit definierter, einstellbarer Viskosität von hydrophoben Oxidpartikel zeichnet sich dadurch aus, dass niedrigstrukfurierte hydrophobe Oxidpartikel in zumindest einem organischen Suspensionsmittel suspendiert werden und anschließend vorzugsweise von 0,05 bis 15 Gew.-%, bevorzugt von 1 bis 12 Gew.-%, besonders bevorzugt von 2 bis 10 Gew.-% bezogen auf das Suspensionsmedium an hochstrukturierten hydrophoben Oxidpartikeln zugegeben werden.

In dem erfindungsgemäßen Verfahren werden als hydrophobe Oxidpartikel, sowohl niedrigals auch hochstrukturiert, vorzugsweise hydrophobe pyrogene Oxidpartikel, bestehend aus einem Material, ausgewählt aus Siliziumoxid, Aluminiumoxid, Zirkoniumoxid, Titanoxid oder eine Mischung dieser Materialien, oder hydrophobe gefällte Oxidpartikel, ausgewählt aus Siliziumoxid, Aluminiumoxid, Zirkoniumoxid, Titanoxid oder eine Mischung dieser Materialien, bevorzugt hydrophobe Fällungskieselsäuren, eingesetzt. Besonders bevorzugt werden in dem erfindungsgemäßen Verfahren hydrophobe pyrogene Kieselsäuren eingesetzt. In einer besonderen Ausführungsform des erfindungsgemäßen Verfahren wird eine Mischung aus niedrigstrukturierten hydrophoben Oxidpartikel eingesetzt. Es kann aber auch eine Mischung aus hochstrukturierten hydrophoben Oxidpartikeln eingesetzt werden.

Die Hydrophobie der Oxidpartikel kann inhärent vorhanden sein oder die Oxidpartikel können auf eine dem Fachmann bekannte Weise hydrophobiert worden sein (Schriftenreihe Pigmente, Nummer 18, der Degussa AG). Dies erfolgt bevorzugt durch eine Behandlung mit zumindest einer Verbindung, ausgewählt aus der Gruppe der Alkylsilane, Alkyldisilazane, beispielsweise mit Hexamethyldisilazan, oder Perfluoralkylsilane.

In einem ersten Verfahrensschritt des erfindungsgemäßen Verfahrens werden vorzugsweise von 0,05 bis 2,5 Gew.-%, bevorzugt von 0,1 bis 2,0 Gew.-%, besonders bevorzugt von 0,5 bis 1,2 Gew.-% bezogen auf das Suspensionsmedium an niedrigstrukturierten hydrophoben Oxidpartikeln in zumindest einem organischen Suspensionsmittel suspendiert.

Als Suspensionsmittel können in dem erfindungsgemäßen Verfahren Alkohole, Ketone, Ether, Ester, aliphatische oder aromatische Kohlenwasserstoffe, Amide oder Sulfoxide eingesetzt werden. In einer besonderen Ausführungsform des erfindungsgemäßen Verfahrens können auch Mischungen der oben genannten Suspensionsmittel eingesetzt werden, bevorzugt wird ein Suspensionsmedium eingesetzt, das neben dem organischen Suspensionsmittel oder dem organischen Suspensionsmittelgemisch Wasser enthält.

Die Dibutylphthalat-Absorption (DBP-Absorption) wird gemäß DIN 53 601 gemessen. Die Stampfdichte wird gemäß DIN 53 194 gemessen. Beispielsweise weist das Aerosil R 812 S als hochstrukturierte hydrophobe pyrogene Kieselsäure eine Stampfdichte von 50 g/l auf, dagegen weist das Aerosil VP LE 8241 als niedrigstrukturierte hydrophobe pyrogene Kieselsäure eine Stampfdichte von 140 g/l auf.

Die niedrigstrukturierten hydrophoben Oxidpartikel können mittels eines Trockenmahlverfahrens gemäß EP 0 637 616 B1 oder US 5,959,005 aus hochstrukturierten hydrophoben Oxidpartikel hergestellt werden, hierbei handelt es sich um ein intensives Mahlverfahren, das über die normale Verringerung der Teilchengröße hinausgehend eine Destrukturierung der Oxidpartikel bedingt. Hierbei handelt es sich um einen irreversiblen Prozess.

In einer besonderen Ausführungsart des erfindungsgemäßen Verfahrens werden sowohl als niedrig- als auch als hochstrukturierte hydrophobe pyrogene Oxidpartikel Aerosile^{®} eingesetzt. Als niedrigstrukturiertes hydrophobes Aerosil^{®} wird bevorzugt das Aerosil^{®} VP LE 8241 eingesetzt. Das Aerosil^{®} R 812 S wird in dieser besonderen Ausführungsart des erfindungsgemäßen Verfahrens als hochstrukturiertes hydrophobes Aerosil^{®} eingesetzt.

Die in dem erfindungsgemäßen Verfahren eingesetzten niedrigstrukturierten hydrophoben Oxidpartikel weisen bevorzugt eine Oberfläche mit einer unregelmäßigen Feinstruktur im Nanometerbereich auf, also im Bereich von 1 nm bis 1000 nm, vorzugsweise von 2 nm bis 750 nm und ganz besonders bevorzugt von 10 nm bis 100 nm, auf. Unter Feinstruktur werden Strukturen verstanden, die Höhen, Zacken, Spalten, Grate, Risse, Hinterschnitte, Kerben und/oder Löcher in den oben genannten Abständen und Bereichen aufweisen. Die Feinstruktur der niedrigstrukturierten hydrophoben Oxidpartikel kann bevorzugt Erhebungen mit einem Aspektverhältnis von größer 1, besonders bevorzugt größer 1,5 aufweisen. Das Aspektverhältnis ist wiederum definiert als Quotient aus maximaler Höhe zu maximaler Breite der Erhebung, bei Graten oder anderen längsgeformten Erhebungen wird die Breite quer zur Längsrichtung herangezogen.

Vorzugsweise werden niedrigstrukturierte hydrophobe Oxidpartikel in dem erfindungsgemäßen Verfahren eingesetzt, die einen mittleren Partikeldurchmesser von 0,005 µm bis 100 µm, bevorzugt von 0,01 µm bis 50 µm und besonders bevorzugt von 0,01 µm bis 30 µm aufweisen, eingesetzt. So können auch niedrigstrukturierte hydrophobe Oxidpartikel, die sich in dem Suspensionsmedium aus Primärteilchen zu Agglomeraten oder Aggregaten mit einer Größe von 0,02 µm bis 100 µm zusammenlagern, eingesetzt werden.

Zur Zerstörung evtl. vorhandener Agglomerate ist es vorteilhaft das Suspendieren der hydrophoben Oxidpartikel mit hohen Scherenergieeinträgen, beispielsweise mittels Dissolverscheibe, durchzuführen. Der Einsatz von Turbolenz erhöhenden Einbauten, wie Strömungsbrecher oder andere Hindernisse, die zur Vermeidung der Ausbildung von Wasserwalzen dienen, kann ebenso vorteilhaft sein. Die Reynoldszahl liegt bevorzugt oberhalb von 2320. Die Richardsonzahl setzt die Stärke der thermischen Schichtung in ein Verhältnis zur Stärke der Scherung einer Strömung. Sie ist somit eine Maßzahl für das Verhältnis der Größen, die für die Ausbreitung oder das Abklingen der Turbulenz verantwortlich sind. Die Richardsonzahl bezieht sich auf einen lokalen Gradienten an einem Punkt der Strömung, für das erfindungsgemäße Verfahren liegt die Richardsonzahl bei maximal 0,25. Eine Definition der Richardsonzahl findet man u.a. bei H. Kobus (Vorlesungsskript "Gewässerhydraulik" Lehrstuhl für Hydraulik und Grundwasser, Institut für Wasserbau, Universität Stuttgart).

Abhängig von der beigefügten Menge an hochstrukturierten hydrophoben Oxidpartikel können Suspensionen mit dynamischen Viskositäten bei einer Scherrate von > 20 s⁻¹ vorzugsweise von 1,0 bis 1000 mPa s, bevorzugt von 1 bis 500 mPa s, besonders bevorzugt von 1 bis 400 mPa s hergestellt werden. Bei einer Menge an hochstrukturierten hydrophoben Oxidpartikel, wie beispielsweise dem Aerosil^{®} R 812 S, von ≥ 5 Gew.-% bezogen auf das Suspensionsmedium können sogar Suspension mit einem strukturviskosem Fließverhalten mittels dem erfindungsgemäßen Verfahren hergestellt werden.

Die erfindungsgemäße Suspension von hydrophoben Oxidpartikel mit definierter, einstellbarer Viskosität, zeichnet sich dadurch aus, dass niedrigstrukturierte hydrophobe Oxidpartikel und von 0,05 bis 15 Gew.-% bezogen auf das Suspensionsmedium an hochstrukturierten hydrophoben Oxidpartikeln in zumindest einem organischen Suspensionsmittel suspendiert vorliegen, wobei unter niedrigstrukturierten hydrophoben Oxidpartikeln hydrophobe Oxidpartikel verstanden werden, die gegenüber den entsprechenden hochstrukturierten hydrophoben Oxidpartikeln eine um mindestens 30 % verringerte Dibutylphthalat-Absorption und eine um mindestens 50 % erhöhte Stampfdichte aufweisen.

In der erfindungsgemäßen Suspension von hydrophoben Oxidpartikeln mit definierter, einstellbarer Viskosität können bevorzugt von 1 bis 12 Gew.-% und besonders bevorzugt von 2 bis 10 Gew.-% bezogen auf das Suspensionsmedium an hochstrukturierten hydrophoben Oxidpartikeln in zumindest einem organischen Suspensionsmittel suspendiert vorliegen.

Die erfindungsgemäße Suspension weist vorzugsweise von 0,05 bis 2,5 Gew.-%, bevorzugt von 0,1 bis 2,0 Gew.-%, besonders bevorzugt von 0,5 bis 1,2 Gew.-% bezogen auf das Suspensionsmedium an niedrigstrukturierten hydrophoben Oxidpartikeln auf.

Bevorzugt wird die erfindungsgemäße Suspension nach dem zuvor beschriebenen erfindungsgemäßen Verfahren hergestellt.

Die erfindungsgemäße Suspension weist als hydrophobe Oxidpartikel, sowohl niedrig- als auch hochstrukturiert, vorzugsweise hydrophobe pyrogene Oxidpartikel, bestehend aus einem Material, ausgewählt aus Siliziumoxid, Aluminiumoxid, Zirkoniumoxid oder Titanoxid, oder hydrophobe gefällte Oxidpartikel, ausgewählt aus Siliziumoxid, Aluminiumoxid, Zirkoniumoxid oder Titanoxid, bevorzugt hydrophobe Fällungskieselsäuren, auf. Besonders bevorzugt weist die erfindungsgemäße Suspension hydrophobe pyrogene Kieselsäuren auf. In einer besonderen Ausführungsform der erfindungsgemäßen Suspension weist diese eine Mischung aus niedrigstrukturierten hydrophoben Oxidpartikel auf. Die erfindungsgemäße Suspension kann aber auch eine Mischung aus hochstrukturierten hydrophoben Oxidpartikeln aufweisen.

Die Hydrophobie der Oxidpartikel kann inhärent vorhanden sein oder die Oxidpartikel können auf eine dem Fachmann bekannte Weise hydrophobiert worden sein (Schriftenreihe Pigmente, Nummer 18, der Degussa AG). Dies erfolgt bevorzugt durch eine Behandlung mit zumindest einer Verbindung, ausgewählt aus der Gruppe der Alkylsilane, Alkyldisilazane, beispielsweise mit Hexamethyldisilazan, oder Perfluoralkylsilane.

Als Suspensionsmittel kann die erfindungsgemäße Suspension Alkohole, Ketone, Ether, Ester, aliphatische oder aromatische Kohlenwasserstoffe, Amide oder Sulfoxide aufweisen. Vorzugsweise enthält die erfindungsgemäße Suspension eine Mischung der oben genannten Suspensionsmittel, bevorzugt jedoch ein Suspensionsmedium, das neben dem organischen Suspensionsmittel oder dem organischen Suspensionsmittelgemisches Wasser aufweist.

Die Dibutylphthalat-Absorption (DBP-Absorption) wird gemäß DIN 53 601 gemessen.. Die Stampfdichte wird gemäß DIN 53 194 gemessen. Beispielsweise weist das Aerosil R 812 S als hochstrukturierte hydrophobe pyrogene Kieselsäure eine Stampfdichte von 50 g/l auf, dagegen weist das Aerosil VP LE 8241 als niedrigstrukturierte hydrophobe pyrogene Kieselsäure eine Stampfdichte von 140 g/l auf.

Die niedrigstrukturierten hydrophoben Oxidpartikel können mittels eines Trockenmahlverfahrens gemäß EP 0 637 616 B1 oder US 5,959,005 aus hochstrukturierten hydrophoben Oxidpartikel hergestellt werden, hierbei handelt es sich um ein intensives Mahlverfahren, das über die normale Verringerung der Teilchengröße hinausgehend eine Destrukturierung Metalloxide bedingt. Hierbei handelt es sich um einen irreversiblen Prozess.

Die erfindungsgemäße Suspension weist sowohl als niedrig- als auch als hochstrukturierte hydrophobe Oxidpartikel vorzugsweise Aerosile^{®} auf. Diese Suspension weist als niedrigstrukturiertes hydrophobes Aerosil^{®} bevorzugt das Aerosil^{®} VP LE 8241 auf. In dieser besonderen Ausführungsart der erfindungsgemäßen Suspension weist diese als hochstrukturiertes hydrophobes Aerosil^{®} das Aerosil^{®} R 812 S auf.

Die in der erfindungsgemäßen Suspension enthaltenen niedrigstrukturierten hydrophoben Oxidpartikel weisen bevorzugt eine Oberfläche mit einer unregelmäßigen Feinstruktur im Nanometerbereich auf, also im Bereich von 1 nm bis 1000 nm, vorzugsweise von 2 nm bis 750 nm und ganz besonders bevorzugt von 10 nm bis 100 nm, auf. Unter Feinstruktur werden Strukturen verstanden, die Höhen, Zacken, Spalten, Grate, Risse, Hinterschnitte, Kerben und/oder Löcher in den oben genannten Abständen und Bereichen aufweisen. Die Feinstruktur der niedrigstrukturierten hydrophoben Oxidpartikel kann bevorzugt Erhebungen mit einem Aspektverhältnis von größer 1, besonders bevorzugt größer 1,5 aufweisen. Das Aspektverhältnis ist wiederum definiert als Quotient aus maximaler Höhe zu maximaler Breite der Erhebung, bei Graten oder anderen längsgeformten Erhebungen wird die Breite quer zur Längsrichtung herangezogen.

Vorzugsweise weist die erfindungsgemäße Suspension niedrigstrukturierte hydrophobe Oxidpartikel auf, die einen mittleren Partikeldurchmesser von 0,005 µm bis 100 µm, bevorzugt von 0,01 µm bis 50 µm und besonders bevorzugt von 0,01 µm bis 30 µm aufweisen. So können auch niedrigstrukturierte hydrophobe Oxidpartikel, die sich in dem Suspensionsmedium aus Primärteilchen zu Agglomeraten oder Aggregaten mit einer Größe von 0,02 µm bis 100 µm zusammenlagem, in der erfindungsgemäßen Suspension enthalten sein.

Abhängig von der enthaltenen Menge an hochstrukturierten hydrophoben Oxidpartikel kann die erfindungsgemäße Suspension eine dynamische Viskosität bei Scherraten von größer 20 s⁻¹ vorzugsweise von 1,0 bis 1000 mPa s, bevorzugt von 1 bis 500 mPa s, besonders bevorzugt von 1 bis 400 mPa s aufweisen. Bei einer Menge an hochstrukturierten hydrophoben Oxidpartikel, wie beispielsweise dem Aerosil^{®} R 812 S, von ≥ 5 Gew.-% bezogen auf das Suspensionsmedium kann die erfindungsgemäße Suspension ein strukturviskoses Fließverhalten aufweisen.

Die erfindungsgemäßen Suspensionen und die mittels dem erfindungsgemäßen Verfahren hergestellten Suspensionen können zur Herstellung von schmutz- und wasserabweisenden Beschichtungen auf Gegenständen verwendet werden, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist. Die Beschichtung der Gegenstände ist dadurch gekennzeichnet, dass eine erfindungsgemäße Suspension oder eine mittels dem erfindungsgemäßen Verfahren hergestellte Suspension auf zumindest eine Oberfläche eines Gegenstandes aufgebracht und das Suspensionsmedium anschließend entfernt wird.

In einer besonderen Ausführungsform der Verwendung der erfindungsgemäßen Suspension oder einer mittels dem erfindungsgemäßen Verfahren hergestellten Suspension zur Herstellung von schmutz- und wasserabweisenden Beschichtung wird die erfindungsgemäße Suspension oder eine mittels dem erfindungsgemäßen Verfahren hergestellte Suspension mittels eines Rakels auf die zu beschichtende Oberfläche, vorzugsweise von Textilien, aufgetragen. Die erfindungsgemäße Suspension oder eine mittels dem erfindungsgemäßen Verfahren hergestellte Suspension eignet sich bevorzugt zur Herstellung von beschichteten textilen Flächengebilden, die wasser- und schmutzabweisende Eigenschaften aufweisen, bzw. zur Herstellung von schmutz- und wasserabweisenden Beschichtungen auf Textilien.

Die erfindungsgemäßen Suspensionen oder die mittels dem erfindungsgemäßen Verfahren hergestellten Suspensionen können für die Herstellung von Bekleidung, insbesondere für die Herstellung von Schutzbekleidung, Regenbekleidung und Sicherheitsbekleidung mit Signalwirkung, technische Textilien, insbesondere für die Herstellung von Abdeckplanen, Zeltplanen, Schutzabdeckungen LKW-Planen, und Geweben des textilen Bauens, insbesondere für die Herstellung von Sonnenschutzdächer, wie beispielsweise Markisen, Sonnensegel, Sonnenschirme, verwendet werden.

Die nachfolgenden Beispiele sollen das erfindungsgemäße Verfahren sowie die erfindungsgemäßen Suspensionen näher erläutern, ohne dass die Erfindung auf diese Ausführungsform beschränkt sein soll.

### Beispiel 1:

In einem Ultraturax wurden 1 Gewichtsteil Aerosil^{®} VP LE 8241 (Degussa AG) in 100 Gewichtsteilen vergälltem absoluten Ethanol suspendiert. Zu dieser Suspension von Aerosil^{®} VP LE 8241 in Ethanol wurde unter Verwendung eines Ultraturax 5 Gewichtsteile Aerosil^{®} R 812 S (Degussa AG) zugegeben und heftig durchmischt.

### Beispiel 2:

Es wurde die in Beispiel 1 hergestellte Suspension von Aerosil^{®} VP LE 8241 in vergälltem Ethanol mittels eines Rakels mit einer Schichtdicke von 50 µm auf ein Kraft-Kaschierpapier der Fa. SCA Flex Pack Papers GmbH aufgetragen. Nach dem Verdampfen des Suspensionsmittels bei Raumtemperatur wurde eine Polyurethandispersion der Firma Novotex Italien gemäß der Tabelle 1 mittels eines Filmziehrakels mit einer Schichtdicke von 50 µm auf das vorbehandelte Kaschierpapier aufgetragen. In die noch feuchte Oberfläche der Polyurethanbeschichtung wurde ein Trikotgewebe aus einem Polyamidgewebe (DECOTEX der Firma IBENA Textilwerke Beckmann GmbH) einkaschiert. Die Polyurethanbeschichtung wurde bei einer Temperatur von 150 °C 2 Minuten lang thermisch gehärtet und anschließend das Kaschierpapier entfernt.

**Tabelle 1: Versuchsparameter zu Beispiel 2**

| **Versuch** | **Polyurethandispersion** | | |
|---|---|---|---|
| | ***Bezeichnung*** | ***Typ*** | ***Charakterisierung des Lotus-Effekts*** |
| 2.1 | Larithane^{®} AL 227 | aliphatisch | +++ |
| 2.2 | Laripur^{®} SH1020 in Methylethylketon / Dimethylformamid | | ++ |
| 2.3 | Impranil^{®} ENB-03 | aromatisch | ++ |
| 2.4 | Larithane^{®} MA 80 | aromatisch | ++ |

Die Charakterisierung der beschichteten textilen Flächengebilde erfolgte anfänglich visuell. +++ bedeutet, Wassertropfen bilden sich nahezu vollständig aus. Der Abrollwinkel liegt unterhalb von 10°. ++ bedeutet, die Ausformung der Wassertropfen ist nicht ideal, der Abrollwinkel liegt unterhalb von 20°.

### Beispiel 3:

In einem Ultraturax wurden 1 Gewichtsteil Aerosil^{®} VP LE 8241 in 100 Gewichtsteilen eines organischen Suspensionsmittels suspendiert. Zu dieser Suspension von Aerosil^{®} VP LE 8241 wurde unter Verwendung eines Ultraturax Aerosil^{®} R 812 S zugegeben und heftig durchmischt. Anschließend wurde die erhaltene Suspension auf ein Polyestermischgewebe (DECOTEX der Firma IBENA Textilwerke Beckmann GmbH) mittels eines Rakels mit einer Schichtdicke von 50 µm aufgetragen. Anschließend wurde das Suspensionsmedium bei Raumtemperatur bzw. in einem Trockenschrank verdampft.

**Tabelle 2: Versuchsparameter zu Beispiel 3**

| **organisches** | **Aerosil^{®} R 812 S** | **Charakterisierung** |
|---|---|---|
| **Suspensionsmittel** | in Gewichtsteilen | **des Lotus-Effekts** |
| Isopropanol | 3 | ++ |
| Dimethylsulfoxid | 3 | ++ |
| | 5 | +++ |
| Toluol | 3 | +++ |
| | 5 | +++ |
| Tetrahydrofuran | 1 | ++ |
| | 3 | +++ |
| Cyclohexanon | 1 | ++ |
| | 3 | ++ |

Die Charakterisierung der beschichteten textilen Flächengebilde erfolgte anfänglich visuell. +++ bedeutet, Wassertropfen bilden sich nahezu vollständig aus. Der Abrollwinkel liegt unterhalb von 10°. ++ bedeutet, die Ausformung der Wassertropfen ist nicht ideal, der Abrollwinkel liegt unterhalb von 20°.

### Beispiel 4:

a.) In einem Ultraturax wurden 5 Gewichtsteil Aerosil^{®} R 812 S in 100 Gewichtsteilen in Toluol suspendiert und heftig durchmischt. Anschließend wurde die erhaltene Suspension auf ein Polyestermischgewebe (DECOTEX der Firma IBENA Textilwerke Beckmann GmbH) mittels eines Rakels mit einer Schichtdicke von 50 µm aufgetragen Anschließend wurde das Suspensionsmedium bei Raumtemperatur bzw. in einem Trockenschrank verdampft. Nach dem Trocknen des beschichteten Gewebes waren Fehlstellen gegeben. Der Lotus-Effekt konnte aufgrund mangelhafter Anhaftung der Oxidpartikel auf dem Gewebe nicht bestimmt werden.
b.) In einem Ultraturax wurden 1 Gewichtsteil Aerosil^{®} VP LE 8241 in 100 Gewichtsteilen in Toluol suspendiert. Zu dieser Suspension von Aerosil^{®} VP LE 8241 wurde unter Verwendung eines Ultraturax Aerosil^{®} R 812 S zugegeben und heftig durchmischt. Anschließend wurde die erhaltene Suspension auf ein Polyestermischgewebe (DECOTEX der Firma IBENA Textilwerke Beckmann GmbH) mittels eines Rakels mit einer Schichtdicke von 50 µm aufgetragen Anschließend wurde das Suspensionsmedium bei Raumtemperatur bzw. in einem Trockenschrank verdampft. Die Charakterisierung der auf diese Weise beschichteten textilen Flächengebilde erfolgte anfänglich visuell und ergab eine Beurteilung des Lotus-Effektes von +++. Dies bedeutet, dass sich Wassertropfen sich nahezu vollständig ausbilden und der Abrollwinkel unterhalb von 10° liegt.

### Beispiel 5:

Analog zu Beispiel 1 wurden Suspensionen von Aerosil^{®} VP LE 8241 und Aerosil^{®} R 812 S mit verschiedenen Lösemitteln hergestellt und anschließend die dynamische Viskosität bei einer Temperatur von 23 °C und einer Scherrampe von γ = 0,3 - 50 s⁻¹ mittels eines Rheometers der Firma Haake Typ RS75 mittels des Platte-Kegel-Meßsystems HC 60 / 2° gemessen. Eine Zusammenstellung der Ergebnisse und der jeweiligen Zusammensetzung der Suspension zeigt die Tabelle 3.

**Tabelle 3:**

| **Nr.** | **Aerosil** | **Aerosil** | **Lösemittel** | **Dynamische** | **Bemerkung** |
|---|---|---|---|---|---|
| | **VPLE 8241** | **R 812 S** | | **Viskosität** | |
| | **[in %]** | **[in %]** | | **in** η **mPa s** | |
| 5.1 | 1,0 | 1,0 | Ethanol | 1,6 | Fast newtonsches Fließverhalten |
| 5.2 | 1,0 | 3,0 | Ethanol | 4,3 | Fast newtonsches Fließverhalten |
| 5.3 | 1,0 | 5,0 | Ethanol | 17 | Strukturviskoses Fließverhalten |
| 5.4 | 1,25 | 7,5 | Ethanol | 370 | Strukturviskoses Fließverhalten, mit Fließgrenze |
| 5.5 | 1,0 | 1,0 | DMF | 1,6 | Fast newtonsches Fließverhalten |
| 5.6 | 1,0 | 3,0 | DMF | 5,0 | Fast newtonsches Fließverhalten |
| 5.7 | 1,0 | 5,0 | DMF | 52 | Strukturviskoses Fließverhalten |
| 5.8 | 1,25 | 11,25 | DMF | 340 | Strukturviskoses Fließverhalten, mit Fließgrenze |
| 5.9 | 1,0 | 1,0 | Toluol | 1,2 | Fast newtonsches Fließverhalten |
| 5.10 | 1,0 | 3,0 | Toluol | 3,5 | Fast newtonsches Fließverhalten |
| 5.11 | 1,0 | 5,0 | Toluol | 9,5 | Strukturviskoses Fließverhalten |
| 5.12 | 1,25 | 8,75 | Toluol | 180 | Strukturviskoses Fließverhalten, mit Fließgrenze |

## Patentansprüche

1. Verfahren zur Herstellung einer Suspension von hydrophoben Oxidpartikeln mit definierter, einstellbarer Viskosität,
**dadurch gekennzeichnet,**
**dass** niedrigstrukturierte hydrophobe Oxidpartikel in zumindest einem organischen Suspensionsmittel suspendiert werden und anschließend von 0,05 bis 15 Gew.-% bezogen auf das Suspensionsmedium an hochstrukturierten hydrophoben Oxidpartikeln zugegeben werden, wobei unter niedrigstrukturierten hydrophoben Oxidpartikeln hydrophobe Oxidpartikel verstanden werden, die gegenüber den entsprechenden hochstrukturierten hydrophoben Oxidpartikeln eine um mindestens 30 % verringerte Dibutylphthalat-Absorption und eine um mindestens 50 % erhöhte Stampfdichte aufweisen.

2. Verfahren gemäß Anspruch 1,
**dadurch gekennzeichnet,**
**dass** als hydrophobe Oxidpartikel hydrophobe pyrogene Oxidpartikel oder hydrophobe gefällte Oxidpartikel eingesetzt werden.

3. Verfahren gemäß Anspruch 1 oder 2,
**dadurch gekennzeichnet,**
**dass** hydrophobe pyrogene Oxidpartikel bestehend aus einem Material, ausgewählt aus Siliziumoxid, Aluminiumoxid, Zirkoniumoxid, Titanoxid oder eine Mischung dieser Materialien, eingesetzt werden.

4. Verfahren gemäß zumindest einem der Ansprüche 1 bis 3,
**dadurch gekennzeichnet,**
**dass** als hydrophobe pyrogene Oxidpartikel hydrophobe pyrogene Kieselsäuren eingesetzt werden.

5. Verfahren gemäß zumindest einem der Ansprüche 1 bis 4,
**dadurch gekennzeichnet,**
**dass** 0,05 bis 2,5 Gew.-% an niedrigstrukturierten hydrophoben Oxidpartikeln bezogen auf das Suspensionsmedium eingesetzt werden.

6. Verfahren gemäß zumindest einem der Ansprüche 1 bis 5,
**dadurch gekennzeichnet,**
**dass** ein organisches Suspensionsmittel, ausgewählt aus Alkoholen, Ketonen, Ether, Ester, aliphatischen oder aromatischen Kohlenwasserstoffen, Amide oder Sulfoxide, eingesetzt wird.

7. Verfahren gemäß zumindest einem der Ansprüche 1 bis 6,
**dadurch gekennzeichnet,**
**dass** als Suspensionsmedium ein Suspensionsmedium eingesetzt wird, das neben dem organischen Suspensionsmittel Wasser enthält.

8. Suspension von hydrophoben Oxidpartikeln mit definierter, einstellbarer Viskosität,
**dadurch gekennzeichnet,**
**dass** niedrigstrukturierte hydrophobe Oxidpartikel und 0,05 bis 15 Gew.-% bezogen auf das Suspensionsmedium an hochstrukturierten hydrophoben Oxidpartikel in zumindest einem organischen Suspensionsmittel suspendiert vorliegen, wobei unter niedrigstrukturierten hydrophoben Oxidpartikeln hydrophobe Oxidpartikel verstanden werden, die gegenüber den entsprechenden hochstrukturierten hydrophoben Oxidpartikeln eine um mindestens 30 % verringerte Dibutylphthalat-Absorption und eine um mindestens 50 % erhöhte Stampfdichte aufweisen.

9. Suspension gemäß Anspruch 8 hergestellt nach einem Verfahren gemäß zumindest einem der Ansprüche 1 bis 7.

10. Suspension gemäß Anspruch 8 oder 9,
**dadurch gekennzeichnet,**
**dass** die Suspension 0,05 bis 2,5 Gew.-% an hydrophoben niedrigstrukturierten Oxidpartikel bezogen auf das Suspensionsmedium aufweist.

11. Suspension gemäß zumindest einem der Ansprüche 8 bis 10,
**dadurch gekennzeichnet,**
**dass** die Suspension eine dynamische Viskosität von 1,0 bis 1000 mPa s bei einer Scherrate von größer 20 s⁻¹ ausweist.

12. Suspension gemäß zumindest einem der Ansprüche 8 bis 11,
**dadurch gekennzeichnet,**
**dass** das Suspensionsmedium neben dem organischen Suspensionsmittel Wasser aufweist.

13. Verwendung der Suspension gemäß zumindest einem der Ansprüche 8 bis 12 zur Herstellung von schmutz- und wasserabweisenden Beschichtungen auf Gegenständen.

14. Verwendung gemäß Anspruch 13,
**dadurch gekennzeichnet,**
**dass** die Suspension auf zumindest einer Oberfläche eines Gegenstandes aufgebracht und das Suspensionsmedium anschließend entfernt wird.

15. Verwendung gemäß Anspruch 13 oder 14,
**dadurch gekennzeichnet,**
**dass** die Suspension mittels eines Rakels aufgetragen wird.

16. Verwendung gemäß zumindest einem der Ansprüche 13 bis 15 zur Herstellung von schmutz- und wasserabweisenden Beschichtungen auf Textilien.

17. Verwendung gemäß Anspruch 16 zur Herstellung von Bekleidung, technischen Textilien und Geweben des textilen Bauens.

## Claims

1. Process for producing a suspension of hydrophobic oxidic particles which has a defined, adjustable viscosity, **characterized in that** it comprises suspending low structured hydrophobic oxidic particles in at least one organic suspension agent and then adding from 0.05% to 15% by weight based on the suspension medium of high structured hydrophobic oxidic particles, low structured hydrophobic oxidic particles being hydrophobic oxidic particles which, compared with the corresponding high structured hydrophobic oxidic particles, have an at least 30% reduced dibutyl phthalate absorption and an at least 50% higher tamped density.

2. Process according to Claim 1, **characterized in that** the hydrophobic oxidic particles used are hydrophobic fumed oxidic particles or hydrophobic precipitated oxidic particles.

3. Process according to Claim 1 or 2, **characterized in that** the hydrophobic fumed oxidic particles used comprise a material selected from silicon oxide, aluminum oxide, zirconium oxide, titanium oxide or a mixture thereof.

4. Process according to at least one of Claims 1 to 3, **characterized in that** the hydrophobic fumed oxidic particles used are hydrophobic fumed silicas.

5. Process according to at least one of Claims 1 to 4, **characterized in that** the low structured hydrophobic oxidic particles are used in an amount from 0.05% to 2.5% by weight based on the suspension medium.

6. Process according to at least one of Claims 1 to 5, **characterized in that** it utilizes an organic suspension agent selected from alcohols, ketones, ethers, esters, aliphatic or aromatic hydrocarbons, amides or sulfoxides.

7. Process according to at least one of Claims 1 to 6, **characterized in that** the suspension medium used includes water as well as the organic suspension agent.

8. Suspension of hydrophobic oxidic particles which has a defined, adjustable viscosity, **characterized in that** low structured hydrophobic oxidic particles and from 0.05% to 15% by weight based on the suspension medium of high structured hydrophobic oxidic particles are present in suspension in at least one organic suspension agent, low structured hydrophobic oxidic particles being hydrophobic oxidic particles which, compared with the corresponding high structured hydrophobic oxidic particles, have an at least 30% reduced dibutyl phthalate absorption and an at least 50% higher tamped density.

9. Suspension according to Claim 8 obtained by a process according to at least one of Claims 1 to 7.

10. Suspension according to Claim 8 or 9, **characterized in that** the suspension comprises from 0.05% to 2.5% by weight of hydrophobic low structured oxidic particles based on the suspension medium.

11. Suspension according to at least one of Claims 8 to 10, **characterized in that** the suspension has a dynamic viscosity from 1.0 to 1 000 mPa s at a shear rate of greater than 20 s⁻¹.

12. Suspension according to at least one of Claims 8 to 11, **characterized in that** the suspension medium comprises water as well as the organic suspension agent.

13. Use of the suspension according to at least one of Claims 8 to 12 for producing soil and water repellent coatings on articles.

14. Use according to Claim 13, **characterized in that** the suspension is applied to at least one surface of an article and the suspension medium is subsequently removed.

15. Use according to Claim 13 or 14, **characterized in that** the suspension is applied by knife coating.

16. Use according to at least one of Claims 13 to 15 for producing soil and water repellent coatings on textiles.

17. Use according to Claim 16 for producing apparel, industrial textiles and textile building fabrics.

## Revendications

1. Procédé pour la préparation d'une suspension de particules d'oxyde hydrophobes à viscosité définie, ajustable, **caractérisé en ce qu'**on met en suspension dans au moins un milieu organique de mise en suspension des particules d'oxyde hydrophobes faiblement structurées et ensuite on ajoute de 0,05 à 15 % en poids, par rapport au milieu de mise en suspension, de particules d'oxyde hydrophobes fortement structurées, en entendant par particules d'oxyde hydrophobes faiblement structurées des particules d'oxyde hydrophobes qui présentent, par rapport aux particules d'oxyde hydrophobes fortement structurées, une absorption de phtalate de dibutyle diminuée d'au moins 30 % et une densité apparente augmentée d'au moins 50 %.

2. Procédé selon la revendication 1, **caractérisé en ce qu'**on utilise comme particules d'oxyde hydrophobes des particules d'oxyde pyrogénées hydrophobes ou des particules d'oxyde précipitées hydrophobes.

3. Procédé selon la revendication 1 ou 2, **caractérisé en ce qu'**on utilise des particules d'oxyde pyrogénées hydrophobes constituées d'une matière choisie parmi l'oxyde de silicium, l'oxyde d'aluminium, l'oxyde de zirconium, l'oxyde de titane ou un mélange de ces matières.

4. Procédé selon au moins l'une des revendications 1 à 3, **caractérisé en ce qu'**on utilise comme particules d'oxyde pyrogénées hydrophobes des acides siliciques pyrogénés hydrophobes.

5. Procédé selon au moins l'une des revendications 1 à 4, **caractérisé en ce qu'**on utilise de 0,05 à 2,5 % en poids de particules d'oxyde hydrophobes faiblement structurées, par rapport au milieu de mise en suspension.

6. Procédé selon au moins l'une des revendications 1 à 5, **caractérisé en ce qu'**on utilise un milieu organique de mise en suspension, choisi parmi des alcools, des cétones, des éthers, des esters, des hydrocarbures aliphatiques ou aromatiques, des amides ou des sulfoxydes.

7. Procédé selon au moins l'une des revendications 1 à 6, **caractérisé en ce qu'**on utilise comme milieu de mise en suspension un milieu de mise en suspension qui contient de l'eau en plus du milieu organique de mise en suspension.

8. Suspension de particules d'oxyde hydrophobes à viscosité définie, ajustable, **caractérisée en ce que** des particules d'oxyde hydrophobes faiblement structurées et 0,05 à 15 % en poids, par rapport au milieu de mise en suspension, de particules d'oxyde hydrophobes fortement structurées se trouvent en suspension dans au moins un milieu organique de mise en suspension, en entendant par particules d'oxyde hydrophobes faiblement structurées des particules d'oxyde hydrophobes qui présentent, par rapport aux particules d'oxyde hydrophobes fortement structurées correspondantes, une absorption de phtalate de dibutyle diminuée d'au moins 30 % et une densité apparente augmentée d'au moins 50 %.

9. Suspension selon la revendication 8, préparée conformément à un procédé selon au moins l'une des revendications 1 à 7.

10. Suspension selon la revendication 8 ou 9, **caractérisée en ce que** la suspension comporte de 0,05 à 2,5 % en poids de particules d'oxyde hydrophobes faiblement structurées, par rapport au milieu de mise en suspension.

11. Suspension selon au moins l'une des revendications 8 à 10, **caractérisée en ce que** la suspension présente une viscosité dynamique de 1,0 à 1 000 mPa.s à une vitesse de cisaillement de plus de 20 s⁻¹.

12. Suspension selon au moins l'une des revendications 8 à 11, **caractérisée en ce que** le milieu de mise en suspension contient de l'eau en plus du milieu organique de mise en suspension.

13. Utilisation de la suspension selon au moins l'une des revendications 8 à 12, pour la production de revêtements hydrofuges et antisalissures sur des objets.

14. Utilisation selon la revendication 13, **caractérisée en ce qu'**on applique la suspension sur au moins une surface d'un objet et ensuite on élimine le milieu de mise en suspension.

15. Utilisation selon la revendication 13 ou 14, **caractérisée en ce que** la suspension est appliquée au moyen d'une racle.

16. Utilisation selon au moins l'une des revendications 13 à 15, pour la production de revêtements hydrofuges et antisalissures sur des textiles.

17. Utilisation selon la revendication 16, pour la fabrication de vêtements, de textiles industriels et de tissus de la construction textile.
